# FASCICULE DE BREVET EUROPEEN

(11) **EP 3 792 910 B1**
(45) Date de publication et mention de la délivrance du brevet: **06.11.2024**
(21) Numéro de dépôt: 20195187.8
(22) Date de dépôt: 09.09.2020
(51) Int. Cl.: G10K 11/168, G10K 11/172, F02C 7/045

(54) **PANNEAU ACOUSTIQUE D'ENTRÉE D'AIR DE NACELLE D'AÉRONEF À PEAU RÉSISTIVE CRÉNELÉE, ET ENSEMBLE PROPULSIF ET AÉRONEF ÉQUIPÉS DE TELS PANNEAUX ACOUSTIQUES**
AKUSTISCHES PANEEL FÜR DEN LUFTEINLASS IN EINE LUFTFAHRZEUGGONDEL MIT EINER WIDERSTANDSFÄHIGEN GERIEFTEN HAUT, SOWIE ANTRIEBSEINHEIT UND LUFTFAHRZEUG, DIE MIT SOLCHEN AKUSTISCHEN PANEELEN AUSGERÜSTET SIND
ACOUSTIC PANEL OF AIR INTAKE OF AN AIRCRAFT NACELLE WITH CRENELLATED RESISTIVE SKIN, AND PROPULSION ASSEMBLY AND AIRCRAFT PROVIDED WITH SUCH ACOUSTIC PANELS

(30) Priorité: 12.09.2019 FR 1910029
(43) Date de publication de la demande: 17.03.2021
(73) Titulaire: AIRBUS OPERATIONS (S.A.S.), 31060 Toulouse (FR)
(72) Inventeur: PORTE, Alain, 31060 Toulouse Cedex 9 (FR); LALANE, Jacques, 31060 Toulouse Cedex 9 (FR); PRZYBYLA, Benoit, 31060 Toulouse Cedex 9 (FR); COLCOMBET, Thierry, 69630 Chaponost (FR); COLCOMBET, Franck, 69630 Chaponost (FR)
(74) Mandataire: Sarraméa, Claude

(56) Documents cités:
- EP-A1- 2 216 773
- EP-A1- 2 537 753
- EP-A2- 2 026 325
- EP-B1- 2 537 753
- WO-A1-2012/145141
- FR-A1- 2 956 513
- TW-A- 201 610 274
- US-A1- 2015 071 760
- DANIEL VIOUX: "Cellule des aéronefs - Le fuselage des avions de transport", 6 May 2019 (2019-05-06), pages 1 - 14, XP055751525, Retrieved from the Internet <URL:https://www.lavionnaire.fr/CelluleFuseTransport.php> [retrieved on 20201117]

## Description

L'invention concerne un panneau acoustique pour une entrée d'air de nacelle d'aéronef, ainsi qu'un ensemble propulsif et un aéronef équipé d'un tel panneau acoustique.

De façon conventionnelle, une nacelle comprend, de l'avant vers l'arrière, un premier tronçon en amont du flux aérodynamique, appelé entrée d'air, un deuxième tronçon qui recouvre le carter de la soufflante moteur, appelé capot de soufflante, et un troisième tronçon qui présente généralement une zone d'inversion de poussée qui entoure le corps de turbine du moteur à l'aval du flux aérodynamique.

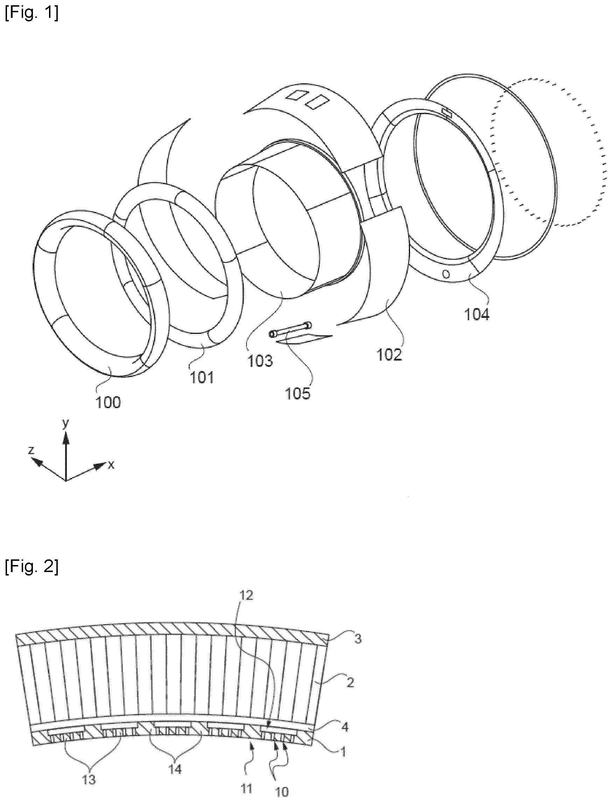

Une entrée d'air, telle celle illustrée à la figure 1 annexée, comprend usuellement des éléments de structure tels qu'un cadre avant 101 et un cadre arrière 104, ainsi que, de l'avant vers l'arrière de la nacelle, une lèvre 100 portée par le cadre avant 101, des panneaux externes 102 prolongeant la lèvre à l'extérieur de la nacelle, des panneaux internes 103 acoustiques prolongeant la lèvre à l'intérieur de la nacelle et délimitant un conduit intérieur permettant de canaliser l'air en direction du moteur, les panneaux externes 102 et internes 103 étant portés par le cadre avant 101 et le cadre arrière 104.

La forme de l'entrée d'air et/ou les systèmes (par exemple le tube de dégivrage 105) dont elle est équipée doivent permettre d'éviter la formation et/ou l'accumulation de glace ou givre, de limiter l'impact des nuisances sonores, d'assurer une fonction aérodynamique, et de prévenir la pénétration d'oiseaux dans le compartiment de soufflante contenant les systèmes moteurs. L'atténuation des nuisances sonores est usuellement obtenue par la provision des panneaux acoustiques 103 précédemment mentionnés.

Dans toute la description, un panneau acoustique (qu'il s'agisse d'un panneau antérieur ou d'un panneau selon l'invention) est observé installé dans une entrée d'air d'aéronef. Les expressions "direction transversale" et "transversalement" font alors référence à une direction qui s'étend dans un plan transversal de l'entrée d'air, c'est-dire une direction qui est orthogonale à l'axe central de l'entrée d'air. L'expression "longitudinalement" fait référence à une direction parallèle à l'axe central X de l'entrée d'air si l'entrée d'air peut être considérée comme étant cylindrique ou à une génératrice de l'entrée d'air si celle-ci peut être considérée comme étant conique. Un "plan longitudinal" est un plan contenant l'axe central de l'entrée d'air.

Les panneaux acoustiques d'entrée d'air connus sont généralement composés par :
✔ une peau résistive qui forme la face visible du conduit intérieur de l'entrée d'air (en aval de la lèvre) et dont l'objectif est d'absorber les ondes sonores,
✔ une peau arrière ayant essentiellement pour fonction d'assurer la tenue structurale du panneau,
✔ une âme en nid d'abeilles de part et d'autre de laquelle sont fixées la peau résistive et la peau arrière, laquelle âme participe à la fois à la tenue mécanique du panneau et à l'amortissement acoustique, l'épaisseur de l'âme déterminant la fréquence sonore amortie.

Au plan mécanique, il y a lieu de remarquer que le panneau acoustique doit pouvoir résister à un certain chargement aérodynamique (surpression), à d'éventuels chocs avec des objets extérieurs tels que des oiseaux et à d'importantes variations thermiques.

La peau résistive des panneaux acoustiques connus est percée d'une multitude de trous pour l'absorption des ondes sonores. Afin d'éviter que les trous ne se bouchent à l'utilisation, il est nécessaire que leur diamètre soit supérieur ou égal à l'épaisseur de la couche percée. En pratique, les peaux résistives connues sont constituées de deux à trois plis et présentent une épaisseur totale comprise entre 0,8 et 1,6 mm, ce qui induit des trous de diamètres compris entre 0,8 et 1,6 mm.

Plus les trous possèdent un diamètre important, plus leur influence sur la traînée est grande. Diminuer l'épaisseur des peaux résistives antérieures pour pouvoir diminuer le diamètre des trous n'est pas une solution envisageable au-delà de 0,6 mm car la peau résistive obtenue souffrirait d'une tenue mécanique insuffisante.

Le document EP 2 537 753 A1 décrit un panneau acoustique de l'état de l'art.

L'invention vise à limiter la traînée générée au niveau des panneaux acoustiques des entrées d'air, tout en proposant un panneau acoustique de conception et de fabrication simples dont la peau résistive présente une tenue mécanique satisfaisante.

Pour ce faire, l'invention propose un panneau acoustique d'entrée d'air de nacelle d'aéronef comprenant une peau résistive percée de trous d'absorption sonore, et une âme contre laquelle s'étend la peau résistive, caractérisé en ce que la peau résistive possède une face visible lisse et une face arrière crénelée présentant une alternance de tranchées, correspondant à une première couche (qualifiée de couche acoustique) de la peau résistive, et de créneaux formés par une seconde couche (qualifiée de couche structurelle), les trous d'absorption sonore étant ménagés uniquement dans les tranchées, c'est-à-dire dans les zones où la peau résistive est la plus fine.

Grâce à l'invention, il est possible de prévoir une épaisseur de peau résistive inférieure à 0,6 mm au niveau des tranchées (première couche acoustique), la présence des créneaux, d'épaisseur supérieure, garantissant la tenue mécanique de la peau résistive.

Ainsi, toujours grâce à l'invention, les trous d'absorption sonore présentent avantageusement un diamètre, ou plus généralement au moins une dimension frontale (si les trous ne sont pas circulaires), qui est supérieure ou égale à l'épaisseur de la peau résistive au niveau des tranchées.

Les trous ayant une dimension plus faible que celle des panneaux acoustiques antérieurs, la traînée occasionnée est diminuée et ce, sans augmentation du risque de voir les trous se boucher. La première couche acoustique peut donc être considérée comme linéaire avec de la micro perforation.

Selon une caractéristique possible de l'invention, les créneaux et les tranchées de la peau résistive s'étendent dans des plans longitudinaux. On parle alors de créneaux longitudinaux et de tranchées longitudinales.

Dans ce cas, de préférence, le panneau acoustique comprend de plus des bobines de renfort ayant la forme d'une bande hélicoïdale ou d'une pluralité de bandes transversales s'étendant entre la peau résistive et l'âme du panneau acoustique en encerclant les créneaux. À noter qu'on entend ici par "bandes transversales", des bandes s'étendant selon la direction circonférentielle dans des plans transversaux.

Le collage des bobines de renfort sur les créneaux n'a pas d'impact sur les propriétés d'absorption sonore de la peau résistive, la forme des créneaux éloignant les bobines de renfort des trous ménagés dans les tranchées. Le taux de surface ouverte (TSO) du panneau acoustique reste le même que la peau résistive soit ou non structurellement renforcée par des bobines. Le TSO est donc maîtrisé de façon précise.

En variante, les créneaux de la peau résistive s'étendent essentiellement dans des plans transversaux, c'est-à-dire dans des plans qui sont orthogonaux à l'axe central X de l'entrée d'air. On parle alors de créneaux transversaux.

De même des tranchées s'étendant essentiellement dans des plans transversaux sont qualifiées de tranchées longitudinales.

Dans ce cas, l'ajout de bobines de renfort telles que précédemment décrites est inutile, les efforts étant repris par les créneaux eux-mêmes. L'épaisseur des créneaux (ou de certains d'entre eux) peut être augmentée si nécessaire afin d'améliorer la rigidité et la solidité de la peau résistive. L'augmentation de l'épaisseur des créneaux n'a pas d'impact sur les qualités acoustiques du panneau puisque les trous d'absorption sonore sont ménagés dans les tranchées.

Dans les deux modes de réalisation précédemment décrits (à créneaux longitudinaux ou à créneaux transversaux), la seconde couche structurelle de la peau résistive prend la forme de bandes séparées les unes des autres. Selon une troisième option la seconde couche structurelle de la peau résistive a la forme d'une couche continue ajourée, dans laquelle sont ménagées des ouvertures qui peuvent être rectangulaires ou oblongues, voire circulaires ou de forme quelconque, les trous d'absorption sonore ménagés dans la première couche acoustique l'étant en regard de ces ouvertures ; on obtient alors un réseau de créneaux de directions diverses (voire aussi de largeurs variables), par exemple un quadrillage de créneaux transversaux et longitudinaux (si les ouvertures sont rectangulaires).

Selon une caractéristique possible de l'invention, la peau résistive comprend de plus un talon avant et/ou un talon arrière prolongeant la face visible de la peau dans des plans transversaux vers l'extérieur de l'entrée d'air (c'est-à-dire dans une direction centrifuge) pour fermer le panneau acoustique à son extrémité avant et/ou arrière.

Le talon avant ou arrière a de préférence la même épaisseur que les créneaux afin de contribuer efficacement à la rigidité du panneau. Il peut être plus épais si nécessaire.

Selon une caractéristique possible de l'invention, la peau résistive est monobloc, c'est-à-dire constituée d'une seule pièce. Cette pièce peut être obtenue en une seule étape de moulage ou, de préférence, par plis successifs. À noter que la première couche acoustique peut correspondre à un ou plusieurs plis. II en va de même de la seconde couche structurelle.

La seconde couche structurelle peut être déposée et fixée sur la première couche acoustique par tout procédé adapté (collage, soudure, consolidation, cuisson, etc.), en particulier par impression 3D.

Selon une caractéristique possible de l'invention, la peau résistive, de même que les éventuelles bobines de renfort précédemment définies, sont en un matériau composite thermoplastique ou thermodurcissable, de préférence un carbone thermoplastique, c'est-à-dire un matériau à base de fibres de carbone et d'une résine thermoplastique, par exemple une résine thermoplastique à hautes performances telle qu'un PEEK (Polyétheréthercétone), un PPS (polyphenylsulfone), un PEI (polyétherimide), un PEKK (Polyéthercétonecétone), etc.

L'invention s'étend à une entrée d'air caractérisée en ce qu'elle comprend des panneaux acoustiques selon l'invention.

Plus précisément, une entrée d'air selon l'invention présente une paroi interne (en aval de la lèvre, entre le cadre avant et le cadre arrière) formée par des panneaux acoustiques selon invention.

De façon usuelle, chaque panneau correspond à un secteur de paroi interne s'étendant longitudinalement entre le cadre avant et le cadre arrière de l'entrée d'air, et présentant des côtés longitudinaux rectilignes, deux panneaux successifs ayant des côtés longitudinaux adjacents.

Diverses solutions peuvent être envisagées pour la fixation de deux panneaux successifs le long de leurs côtés longitudinaux adjacents. De façon générale, dans les diverses solutions proposées ci-après, l'assemblage de deux panneaux successifs s'effectue au niveau de la peau résistive des panneaux et chaque panneau comprend à cette fin une languette de bordure amincie à au moins l'un de ses côtés longitudinaux. Dans la plupart des solutions proposées, la languette de bordure amincie correspond avantageusement à la première couche de la peau résistive (épaisseur au niveau des tranchées) ; il n'y a donc pas de seconde couche (créneaux) au niveau de ces languettes de bordure, lesquelles présentent une face arrière "lisse" (en ce qu'elle est dépourvue de décrochement ou épaulement ou bosse).

Selon une première solution possible, les peaux résistives de deux panneaux adjacents sont fixées entre elles par soyage et collage ou soudure. Dans ce cas, par exemple, chaque panneau comprend une languette de bordure amincie soyée d'un côté du panneau et une languette de bordure amincie non soyée de l'autre côté du panneau. La languette de bordure amincie peut correspondre à la première couche acoustique de la peau résistive.

Selon une deuxième solution, chaque panneau comprend, à chacun de ses côtés longitudinaux, une languette de bordure amincie qui correspond avantageusement à la première couche acoustique de la peau et présente une face arrière "lisse" (dépourvue d'épaulements ou autres bosses). L'assemblage des languettes de bordure adjacentes de deux panneaux successifs s'effectue à l'aide d'éclisses rapportées, fixées sur la face arrière des languettes de bordure (c'est-à-dire entre la peau résistive et l'âme des panneaux). Les éclisses rapportées peuvent être fixées à la face arrière des languettes de bordure par collage ou soudure par exemple. Les éclisses rapportées peuvent avoir la forme d'une plaque rectangulaire. De façon alternative, dans le cas où les créneaux de la peau résistive des panneaux sont transversaux, l'éclisse rapportée peut avoir la forme d'un ou plusieurs H, les bras des H prolongeant les créneaux transversaux tandis que l'âme centrale des H recouvre la jonction entre les languettes de bordure des panneaux.

Selon une troisième solution, chaque panneau présente d'un côté une première languette de bordure amincie formée par la première couche acoustique de la peau résistive et, de l'autre côté, une seconde languette de bordure amincie formée par la seconde couche structurelle de la peau résistive. L'assemblage de panneaux successifs s'effectue par superposition et collage ou soudure (ou autre procédé de fixation approprié) de la première languette (première couche) d'un panneau à la seconde languette (seconde couche) du panneau suivant. Ainsi par exemple, si la seconde couche est formée de bandes transversales uniquement, chaque panneau présente un premier côté "à créneaux rentrants" où les créneaux transversaux "s'arrêtent" avant le bord de la première couche, et un côté à créneaux saillants où les créneaux se prolongent en saillie de la première couche. La partie saillante des créneaux transversaux jouent alors le rôle d'éclisses.

Selon une quatrième solution, chaque panneau présente d'un côté une première languette de bordure à marche(s) interne(s), la languette comportant une superposition de plis formant au moins une marche sur la face arrière de la languette de bordure, et, de l'autre côté, une seconde languette de bordure à marche(s) externe(s), la languette comportant une superposition de plis formant au moins une marche sur la face visible (face avant) de ladite languette. L'assemblage de deux panneaux successifs s'effectue par superposition et collage ou soudure (ou autre procédé de fixation approprié) de la languette de bordure à marche(s) interne(s) de l'un panneau à la languette de bordure à marche(s) externe(s) de l'autre panneau, les marches des languettes s'encastrant pour former un éclissage d'un pli (si les languettes n'ont qu'une marche) ou un éclissage de deux plis (pour des languettes ayant deux marches, résultant de trois plis).

Selon une cinquième solution, chaque panneau présente d'un côté une première languette de bordure à biseau avant et, de l'autre côté, une seconde languette de bordure à biseau arrière. La languette de bordure à biseau arrière d'un panneau peut alors être fixée à la languette de bordure à biseau avant du panneau adjacent par superposition et collage ou soudure (ou autre) desdits biseaux. On crée ainsi un éclissage en écharpe où le transfert des efforts s'effectue sur une pente. De préférence les biseaux (arrière et avant) s'étendent sur une largeur comprise entre 10 mm et 30 mm. De façon générale, les diverses languettes de bordure précédemment décrites présentent de préférence une largeur comprise entre 10 mm et 30 mm.

Une entrée d'air selon l'invention peut segmentée en 3 à 10 secteurs angulaires et donc comprendre entre 3 et 10 panneaux acoustiques. Le nombre de panneaux est choisi en fonction du diamètre de l'entrée d'air de façon à disposer de panneaux pouvant être manipulés, et ce sans danger pour les opérateurs.

D'autres détails et avantages de la présente invention apparaîtront à la lecture de la description suivante, qui se réfère aux dessins schématiques annexés et porte sur des modes de réalisation préférentiels, fournis à titre d'exemples non limitatifs. Sur ces dessins :
[Fig. 1] la figure 1 est une vue éclatée, en perspective, d'une entrée d'air de l'art antérieur. Cette entrée d'air est décrite en introduction.
[Fig. 2] la figure 2 est une vue schématique en coupe selon un plan transversal d'un morceau d'un panneau acoustique correspondant à un premier mode de réalisation de l'invention.
[Fig. 3] la figure 3 est une vue schématique en perspective de la peau résistive d'un second mode de réalisation d'un panneau acoustique selon l'invention.
[Fig. 4] la figure 4 est une vue schématique en perspective de la peau résistive du premier mode de réalisation de la figure 2.
[Fig. 5] la figure 5 est une vue schématique en perspective d'un premier mode de réalisation de la jonction entre deux panneaux successifs ayant une peau résistive à créneaux transversaux.
[Fig. 6] la figure 6 est une vue schématique de dessus (suivant une direction centripète) d'un deuxième mode de réalisation de la jonction entre deux panneaux successifs ayant une peau résistive à créneaux transversaux.
[Fig. 7] la figure 7 est une vue schématique de dessus d'un troisième mode de réalisation de la jonction entre deux panneaux successifs ayant une peau résistive à créneaux transversaux.
[Fig. 8] la figure 8 est une vue en coupe transversale de la jonction de la figure 7.
[Fig. 9] la figure 9 est une vue schématique en perspective d'un quatrième mode de réalisation de la jonction entre deux panneaux successifs ayant une peau résistive à créneaux transversaux et longitudinaux.
[Fig. 10] la figure 10 est une vue schématique en coupe transversale d'un cinquième mode de réalisation de la jonction entre deux panneaux successifs.
[Fig. 11] La figure 11 est une vue schématique en coupe transversale d'un sixième mode de réalisation de la jonction entre deux panneaux successifs.

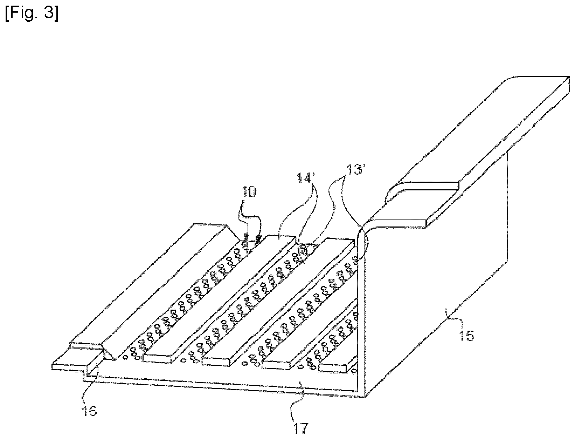

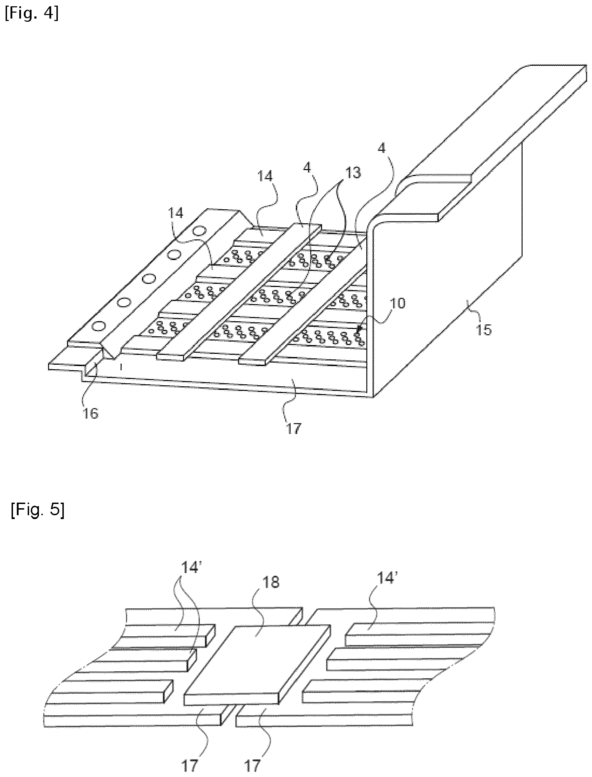

À noter que, pour des raisons de clarté, le rapport entre les différentes dimensions des éléments représentés n'a été respecté sur aucune des figures. En particulier, la courbure du morceau de panneau de la figure 2 est très exagérée (le rapport entre cette courbure et l'épaisseur du panneau n'est pas respecté). De même la proportion entre la longueur, la largeur, l'épaisseur des panneaux ou des créneaux, tranchées et éventuelles bobines de renfort représentés sur les figures 3 et 4 n'est pas respectée.

Un panneau acoustique selon l'invention, tel celui illustré aux figures 2 et 4, comprend une peau résistive 1, une âme 2 à structure alvéolaire qui peut être en nid d'abeilles et optionnellement une peau arrière 3. La peau résistive 1 présente une face arrière 12 crénelée alternant tranchées 13 et créneaux 14, et une face avant 11 "lisse" c'est-à-dire sans décrochage ni épaulement ni tranchée ou autre bosse/creux ou aspérité (en dehors des trous d'absorption sonore). La face 12 de la peau est appliquée contre l'âme et la recouvre donc entièrement, les créneaux formant ainsi des évidements au niveau des tranchées entre la peau et la surface lisse de l'âme.

En d'autres termes, la peau résistive selon l'invention comprend une première couche remplissant une fonction acoustique, correspondant à l'épaisseur des tranchées et dans laquelle sont ménagés les trous d'absorption sonores, et une seconde couche remplissant une fonction structurelle, surmontant la première couche pour former les créneaux, cette seconde couche ne recouvrant donc pas toute la surface de la première couche.

L'épaisseur de la peau résistive 1 au niveau des tranchées 13 (c'est-à-dire l'épaisseur de la première couche acoustique) est de préférence au minimum 30% plus fine que l'épaisseur de la peau résistive au niveau des créneaux 14 (épaisseur de la superposition de la première couche acoustique et de la seconde couche structurelle).

L'épaisseur de la peau résistive au niveau des tranchées 13 est de préférence au maximum égale à 150% de la plus petite dimension des trous d'absorption sonore (décrits ci-après) s'ils sont de forme circulaires ou carrés ou au maximum égale à 200% pour des trous de forme oblongue.

Pour que les ondes sonores puissent pénétrer la peau résistive 1, celle-ci est percée (par exemple par poinçonnage) de trous d'absorption sonore 10. Selon l'invention, ces trous d'absorption sonore ne sont formés que dans les tranchées 13.

Les trous d'absorption 10 illustrés sur les figures sont circulaires mais l'invention n'est pas limitée à cette forme de trous.

Dans le cas de trous d'absorption sonore de forme circulaire, le diamètre des trous est de préférence inférieur à 0,6 mm en fonction du rapport entre la surface ouverte (les trous) et la surface fermée, lequel rapport est appelé TSO dans la suite de la description. Le TSO est dit autrement le pourcentage de surface ouverte (les trous) par rapport à la surface de peau considérée. Pour un TSO compris entre 0 et 2%, les trous sont de diamètre inférieur à 0,6 mm. Pour un TSO supérieur à 2%, le diamètre des trous est inférieur à 0,3 mm. Pour un TSO supérieur à 2%, le diamètre des trous d'absorption sonore est par exemple de 0,1 mm pour une peau résistive ayant une épaisseur de 0,15 mm au niveau des tranchées. Selon un autre exemple, le diamètre des trous d'absorption sonore est de 0,2 mm pour une peau résistive ayant une épaisseur de 0,3 mm au niveau des tranchées.. Les trous d'absorption sonore 10 sont alors considérés comme des micro-perforations qui engendrent peu de traînée.

À noter que les trous d'absorption sonore 10 peuvent avoir des diamètres différents ou un même diamètre (cette seconde option simplifie la fabrication).

Comme indiqué plus haut, on peut prévoir des trous de forme différente et par exemple des trous oblongs. Les trous oblongs peuvent présenter un rapport entre leur longueur et leur largeur compris entre 5 et 15. A titre illustratif, on pourrait par exemple avoir des trous de 0,3 mm de large pour une longueur comprise entre 1,5 et par 30 mm. Les trous peuvent également être en forme de goutte d'eau ou présenter toute autre forme.

Dans le cas de trous non circulaires, les trous présentent avantageusement au moins une de leurs dimensions frontales supérieure ou sensiblement égale à l'épaisseur de la peau résistive au niveau des tranchées.

Les trous d'absorption sonore, qu'ils soient circulaires, oblongs ou autres, se trouvent au fond des tranchées dont l'épaisseur est significativement moindre comparée à l'épaisseur des zones adjacentes. Sont ainsi créées des zones ouvertes très fines favorables à l'acoustique et des zones pleines épaisses favorables à la résistance structurelle.

Selon une forme de réalisation, l'épaisseur au niveau du trou, qu'il soit circulaire, en forme de fente ou autre, peut être affinée.

La largeur des tranchées 13 et la largeur des créneaux 14 sont choisies en fonction du taux de surface ouverte (TSO) souhaitée. Dans l'exemple illustré, toutes les tranchées 13 ont la même largeur (ce qui n'est pas obligatoire), par exemple de l'ordre de 4 mm ; de façon analogue, tous les créneaux ont la même largeur (ce qui n'est pas obligatoire), qui peut être de l'ordre de 2 mm.

La peau résistive 1 peut être construite par assemblage d'un premier pli continu en carbone thermoplastique, ce premier pli correspondant à la première couche acoustique c'est-à-dire à l'épaisseur de la peau au niveau des tranchées 13, et d'un second pli en carbone thermoplastique correspondant à la seconde couche structurelle qui forme les créneaux 14, le second pli présentant de grandes ouvertures en forme de bandes longitudinales correspondant à l'espace entre deux créneaux 14. Le premier pli (ou première couche) peut être perforé ou micro-perforé (avant assemblage) ou être plein (auquel cas les trous d'absorption sonore 10 sont formés après l'assemblage des plis).

En variante, chaque couche (acoustique, structurelle) peut être formée de plusieurs plis.

En variante, la peau résistive 1 peut être constituée d'un seul pli, et obtenue par moulage. Les trous d'absorption peuvent être réalisés après démoulage ou pendant le moulage.

Les créneaux et tranchées sont de section de forme identique sur au moins une partie de leur longueur voire sur toute leur longueur.

Dans le premier mode de réalisation d'un panneau acoustique selon l'invention illustré aux figures 2 et 4 (l'âme et la peau arrière du panneau ne sont pas représentées à la figure 4), les créneaux 14 et les tranchées 13 sont rectilignes et s'étendent dans des plans longitudinaux (lorsque le panneau est vu en position dans une entrée d'air). Les créneaux et tranchées sont, comme de manière usuellement définis, au moins en partie de forme parallélépipédique, à savoir par exemple de section rectangulaire ou trapézoïdale ou en losange et peut être entièrement sensiblement de forme parallélépipédique. Les évidements formés dans les tranchées sont ainsi au moins en partie de forme parallélépipédiques et peut être entièrement sensiblement de forme parallélépipédique. Dans ce premier mode de réalisation, le panneau acoustique comprend de plus des bobines de renfort 4 entre la peau résistive 1 et l'âme 2 du panneau. En s'intercalant entre la peau crénelée et l'âme, la bande 4 éloigne la surface de l'âme de celle de la peau crénelée décrite ci-dessus de manière identique à savoir de la hauteur de la bande 4 que ce soit au niveau des créneaux qu'au niveau des tranchées. La bande 4 assure un espace de hauteur constante évitant tout contact entre la peau crénelée et l'âme.

Ces bobines de renfort 4 sont des bandes circonférentielles s'étendant chacune dans un plan transversal (plan orthogonal à l'axe central de l'entrée d'air) sur les créneaux 14. Les bobines 4 ont pour fonction de renforcer la tenue mécanique de la peau résistive 1. L'épaisseur et la largeur des bobines de renfort sont choisies en fonction des caractéristiques mécaniques souhaitées pour la peau résistive 1.

Les bandes circonférentielles 4 s'étendant dans des plans transversaux peuvent être remplacées par un bobinage hélicoïdal, c'est-à-dire par une unique bande qui s'enroule autour de la peau résistive en formant une hélice (dans ce cas, la bande de renfort ne s'étend pas dans des plans transversaux).

La peau résistive 1 du premier mode de réalisation présente de plus un talon arrière 15 et un talon avant 16. Le talon arrière 15 vient fermer l'extrémité arrière du panneau sur toute son épaisseur, tandis que le talon 16 ne remonte que sur une partie de cette épaisseur. En variante, le panneau peut comprendre un talon avant s'étendant transversalement jusqu'à la peau arrière du panneau, à l'instar du talon arrière 15, ou, inversement, un talon arrière partiel similaire au talon avant 16 représenté.

Dans les panneaux antérieurs connus, les matériaux et procédés de fabrication utilisés confèrent une telle rigidité à la peau résistive qu'il est impossible d'obtenir des talons avant et arrière (qui présentent des courbures opposées) s'étendant dans des plans transversaux, à 90° de la portion perforée de la peau résistive. Les talons sont alors formés avec une "pente" de quelques degrés, ce qui a pour conséquence que le talon a une dimension longitudinale significative qui réduit l'espace disponible pour les perforations et limite le TSO (taux de surface ouverte) et les performances acoustiques du panneau. Dans une peau résistive selon l'invention, les matériaux et procédés de fabrication qui peuvent être mis en oeuvre n'imposent aucune contrainte à la forme des talons, de sorte que toute la longueur du panneau ou presque peut être utilisée pour l'absorption sonore, améliorant ainsi les performances acoustiques du panneau.

La figure 3 représente la peau résistive d'un second mode de réalisation d'un panneau acoustique selon l'invention. La peau résistive de ce panneau présente une alternance de tranchées 13' et de créneaux 14' qui s'étendent dans des plans transversaux. À l'instar du premier mode de réalisation, des micro-perforations sont prévues dans l'épaisseur des tranchées 13'. Par ailleurs, le panneau présente un talon avant 16 et un talon arrière 15 similaires à ceux du premier mode de réalisation.

En revanche, le panneau est dépourvu de bobines de renfort puisque les principaux efforts sont directement repris par les créneaux 14', dont l'épaisseur peut être adaptée à ces efforts.

Chaque panneau présente des bords longitudinaux opposés (bords s'étendant chacun dans un plan longitudinal contenant l'axe central de l'entrée d'air lorsque le panneau est installé dans une entrée d'air) qui sont rectilignes et disposent d'une languette de bordure longitudinale 17 amincie. La largeur de la languette de bordure 17 est suffisante pour permettre une fixation correcte du panneau au panneau adjacent, par exemple par soyage et collage ou soudure. La languette de bordure 17 est dépourvue de trous d'absorption puisqu'elle est destinée à être recouverte par la languette de bordure du panneau adjacent.

L'épaisseur de cette languette de bordure 17 correspond par exemple à l'épaisseur de la peau au niveau des tranchées (épaisseur de la première couche acoustique en carbone thermoplastique). Dans le cas d'un assemblage par soyage des languettes de bordure 17 de deux panneaux adjacents, l'épaisseur de peau résistive à la jonction entre les deux panneaux (où il y a recouvrement des languettes de bordure 17 des deux panneaux) est donc égale à deux fois l'épaisseur au niveau des tranchées, c'est-à-dire à l'épaisseur des créneaux dans le cas où les créneaux sont formés par une seconde couche de même épaisseur que la première couche.

La figure 5 illustre une solution d'assemblage de deux panneaux successifs par éclissage. Là encore chaque panneau présente, à chacun de ses côtés longitudinaux une languette de bordure 17 amincie, limitée à la première couche de peau et donc dépourvue de créneaux 14'. Une éclisse rectangulaire 18 est agencée à cheval sur la face arrière lisse des languettes de bordure adjacentes 17 des deux panneaux successifs. Cette éclisse 18 peut être fixée aux deux languettes par tout moyen approprié (collage, soudure, etc.)

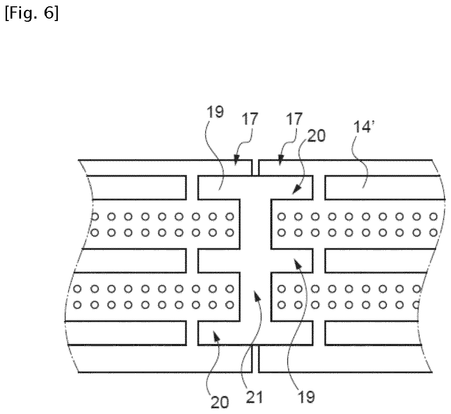

La figure 6 montre une autre éclisse 19 pouvant être utilisée pour assembler la peau résistive des deux panneaux de la figure 5. Cette éclisse 19 a la forme d'un double H ; les bras 20 des H s'étendent transversalement dans le prolongement des créneaux transversaux 14' des panneaux, tandis que l'âme 21 des H s'étend longitudinalement à la jonction des deux panneaux.

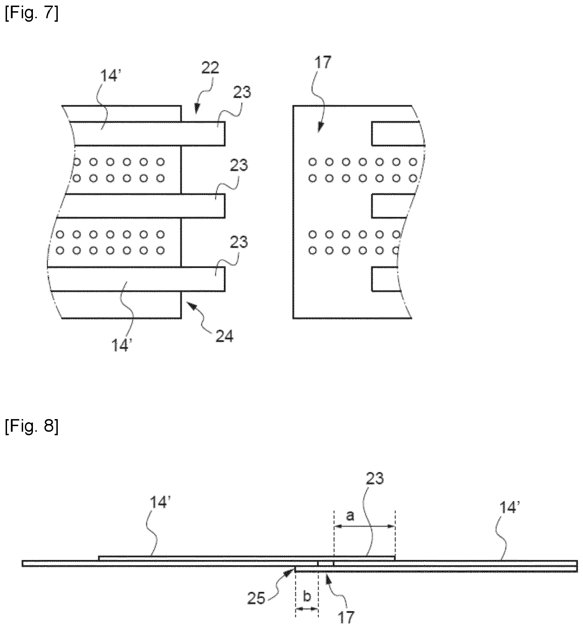

La figure 7 illustre une autre solution d'assemblage de deux panneaux successifs par éclissage, dans le cas de panneaux ayant une peau résistive à créneaux transversaux 14'. Dans cette solution, les créneaux font eux-mêmes office d'éclisses. Chaque panneau comporte d'un côté une première languette de bordure 17 amincie correspondant à la première couche acoustique comme dans les exemples précédents. En revanche, de l'autre côté, le panneau présente une seconde languette de bordure 22 amincie correspondant à la seconde couche structurelle de la peau. Dans cet exemple, la seconde couche consiste en des bandes transversales 14' formant créneaux ; la seconde languette de bordure 22 est donc formée de portions de bandes transversales (créneaux) séparées les unes des autres et qui s'étendent en saillie du bord 24 de la première couche acoustique, sur une largeur de débord qui est par exemple de l'ordre de 25mm. Les panneaux sont agencés de façon à ce que les créneaux 14' de l'un des panneaux s'étendent dans le prolongement des créneaux 14' de l'autre panneau (et *vice versa*) et de préférence de façon à ce que la partie saillante 23 des créneaux de la seconde languette de bordure du premier panneau recouvre les créneaux du deuxième panneau sur une largeur "a" (voir figure 8) par exemple de l'ordre de 20 mm. La première languette de bordure 17 du deuxième panneau est alors agencée en partie sous la peau du premier panneau sur une largeur "b" de l'ordre de 5mm. En variante, il est possible d'agencer les premières couches des peaux résistives des deux panneaux bord à bord mais ceci est moins efficace car il n'est pas souhaitable que de l'air puisse passer directement entre les deux panneaux à leur jonction. À l'inverse, la marche 25 créée dans la face visible des panneaux à leur jonction a peu d'impact aérodynamique car cette marche est longitudinale et donc dans le sens du flux.

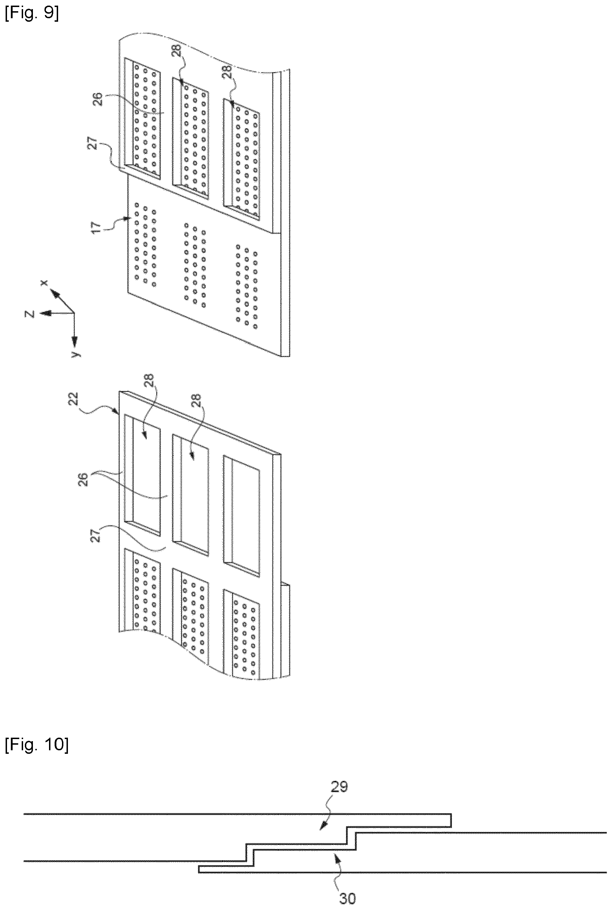

La figure 9 illustre une autre solution d'assemblage de deux panneaux successifs par éclissage. Comme dans l'exemple précédent, chaque panneau comprend une première languette de bordure uniquement formée avec la première couche de la peau et, à l'opposé, une seconde languette de bordure uniquement formée avec la seconde couche de la peau. Dans cette exemple toutefois, la seconde couche structurelle diffère de la seconde couche structurelle de l'exemple précédent en ce qu'elle comprend une surface continue percée d'ouvertures rectangulaires 28 de sorte qu'apparaissent à la fois des créneaux transversaux 26 et des créneaux longitudinaux 27.

Les panneaux peuvent être agencés bord à bord. Dans ce cas, la seconde languette de bordure 22 se superpose entièrement à la première languette de bordure 17. On remarquera que, contrairement aux modes de réalisation des figures 3 et 4, la languette de bordure 17 est pourvue de trous d'absorption sonore puisque la languette de bordure 22 est pourvue d'ouvertures 28, qui permettent le passage des ondes sonores absorbées par les trous de la languette 17.

Il est aussi possible d'agencer les panneaux de la figure 9 avec un recouvrement comme précédemment expliqué, auquel cas le recouvrement est choisi de façon à ce que la rangée d'ouvertures 28 de la languette de bordure 22 du premier panneau se superpose à la première rangée d'ouvertures 28 du second panneau.

La figure 10 illustre une autre solution d'assemblage de deux panneaux successifs par éclissage. Dans cet exemple, la peau de chaque panneau est constituée d'une superposition d'au moins trois plis (à noter que la somme des trois plis peut correspondre à l'épaisseur de la peau au niveau des créneaux ou à la première couche acoustique uniquement). Chaque panneau comprend une première languette de bordure 29 présentant deux marches (ou épaulements) sur sa face avant et une seconde languette 30 présentant deux marches (ou épaulements) sur sa face arrière. Les marches correspondent au passage d'un pli à un autre. L'assemblage de deux panneaux successifs s'effectue par superposition (et fixation par collage ou soudure par exemple) de la première languette de bordure 29 de l'un des panneaux sur la seconde languette de bordure 30 de l'autre panneau. Cette solution convient à des panneaux dont la peau résistive comporte des créneaux (non représentés sur la figure 10) longitudinaux ou transversaux ou les deux.

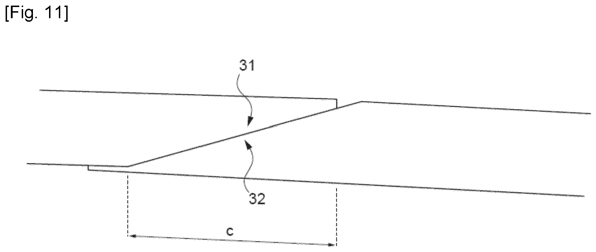

La figure 11 illustre une autre solution d'assemblage de deux panneaux successifs par éclissage en écharpe. Chaque panneau comprend une première languette de bordure 31 biseauté sa face avant et une seconde languette de bordure 32 biseauté sur sa face arrière. Les biseaux avant et arrière desdites languettes de bordure sont formés sur une largeur "c" qui peut aller de 10 à 30 mm, et sur une épaisseur qui correspond à la première couche acoustique ou à l'épaisseur totale (au niveau de créneaux) de la peau. L'assemblage de deux panneaux successifs s'effectue par superposition et fixation (par collage ou soudure par exemple) de la première languette de bordure 31 à biseau avant de l'un des panneaux sur la seconde languette de bordure 32 à biseau arrière de l'autre panneau. Cette solution convient à des panneaux dont la peau résistive comporte des créneaux (non représentés sur la figure 10) longitudinaux ou transversaux ou les deux.

L'invention s'étend à toute variante accessible à l'homme du métier c'est-à-dire entrant dans le cadre délimité par les revendications annexées.

## Revendications

1. Panneau acoustique d'entrée d'air de nacelle d'aéronef comprenant une peau résistive (1) percée de trous d'absorption sonore (10) et une âme (2) contre laquelle s'étend la peau résistive (1) et sur laquelle elle est fixée, les trous permettant aux ondes de se propager dans l'âme pour y être atténués, la peau résistive (1) possédant une face visible (11) lisse et une face arrière (12) crénelée présentant une alternance de tranchées (13 ;13') correspondant à une première couche acoustique de la peau résistive d'épaisseur inférieure et de créneaux (14 ;14') formés par une seconde couche structurelle de la peau résistive d'épaisseur supérieure, le panneau acoustique étant **caractérisé en ce que** les trous d'absorption sonore (10) sont ménagés uniquement dans les tranchées (13 ; 13').

2. Panneau acoustique d'entrée d'air selon la revendication 1, **caractérisé en ce que** l'épaisseur de la peau résistive au niveau des tranchées (13 ; 13') est au minimum 30% plus fine que l'épaisseur de la peau résistive (1) au niveau des créneaux (14 ; 14').

3. Panneau acoustique d'entrée d'air selon l'une des revendications 1 ou 2, **caractérisé en ce que** l'épaisseur de la peau résistive (1) au niveau des tranchées (13, 13') est au maximum égale à 150% de la plus petite dimension des trous d'absorption sonore (10) dans le cas de trous d'absorption sonore de forme circulaire ou carrée, ou au maximum égale à 200% de la plus petite dimension des trous d'absorption sonore dans le cas de trous d'absorption sonore oblongs.

4. Panneau acoustique d'entrée d'air selon l'une des revendications 1 à 3, **caractérisé en ce que** les trous d'absorption sonore (10) sont de forme circulaire et ont un diamètre inférieur à 0,6 mm pour un TSO, taux de surface ouverte, compris entre 0 et 2% et inférieur à 0,3 mm pour un TSO supérieur à 2%.

5. Panneau acoustique d'entrée d'air selon l'une des revendications 1 à 3, **caractérisé en ce que** les trous d'absorption sonore sont de forme oblongue avec un rapport entre longueur et largeur compris entre 5 et 15.

6. Panneau acoustique d'entrée d'air selon l'une des revendications 1 à 5, **caractérisé en ce que** la seconde couche structurelle de la peau résistive a la forme d'une couche continue ajourée, dans laquelle sont ménagées des ouvertures (28) rectangulaires ou oblongues ou circulaires, lesquelles ouvertures délimitent les tranchées dans lesquelles sont ménagés les trous d'absorption sonore.

7. Panneau acoustique d'entrée d'air selon l'une des revendications 1 à 6, **caractérisé en ce que** la peau résistive (1) est monobloc.

8. Panneau acoustique d'entrée d'air selon l'une des revendications 1 à 7, **caractérisé en ce que** la peau résistive (1) est en carbone thermoplastique.

9. Panneau acoustique d'entrée d'air selon l'une des revendications 1 à 8, **caractérisé en ce que** la peau résistive (1) présente deux côtés longitudinaux rectilignes dont au moins l'un est pourvu d'une languette de bordure amincie (17) pour la fixation du panneau acoustique à un panneau acoustique adjacent, les bords longitudinaux étant ceux s'étendant chacun dans un plan longitudinal contenant l'axe central de l'entrée d'air lorsque le panneau est installé dans l'entrée d'air.

10. Panneau acoustique d'entrée d'air selon la revendication 9, **caractérisé en ce que** la languette de bordure amincie (17) correspond à la première couche de la peau résistive.

11. Panneau acoustique d'entrée d'air selon l'une des revendications 9 ou 10, **caractérisé en ce qu'**il comprend une languette de bordure amincie soyée d'un côté du panneau et une languette de bordure amincie non soyée de l'autre côté du panneau.

12. Panneau acoustique d'entrée d'air selon l'une des revendications 9 ou 10, **caractérisé en ce qu'**il présente d'un côté, une première languette de bordure amincie formée par la première couche acoustique de la peau résistive et, de l'autre côté, une seconde languette de bordure amincie formée par la seconde couche structurelle de la peau résistive.

13. Panneau acoustique d'entrée d'air selon l'une des revendications 9 ou 10, **caractérisé en ce qu'**il présente d'un côté, une première languette de bordure à biseau avant (31) et, de l'autre côté, une seconde languette de bordure à biseau arrière (32).

14. Ensemble propulsif pour aéronef, **caractérisé en ce qu'**il comprend une nacelle ayant une entrée d'air équipée de panneaux acoustiques selon l'une des revendications 1 à 13, les expressions "direction transversale" et "transversalement" faisant référence à une direction qui s'étend dans un plan transversal de l'entrée d'air, c'est-dire une direction qui est orthogonale à l'axe central X de l'entrée d'air, un « plan longitudinal » étant un plan contenant l'axe central de l'entrée d'air.

15. Ensemble propulsif selon la revendication 14, **caractérisé en ce que** chaque panneau d'entrée d'air comprend de chaque côté une languette de bordure amincie (17) correspondant à la première couche acoustique de la peau résistive et présentant une face arrière lisse, et **en ce que**, à la jonction entre panneaux successifs, des éclisses (18, 19) sont rapportées et fixées sur la face arrière des languettes de bordure adjacentes desdits panneaux.

16. Ensemble propulsif selon la revendication 14, **caractérisé en ce que** les créneaux (14) de la peau résistive s'étendent essentiellement dans des plans longitudinaux.

17. Ensemble propulsif selon l'une des revendications 14 ou 16, **caractérisé en ce que** le panneau comprend des bobines de renfort ayant la forme d'une bande structurelle hélicoïdale ou d'une pluralité de bandes structurelles transversales (4) s'étendant entre la peau résistive (1) et l'âme (2) du panneau acoustique en encerclant les créneaux longitudinaux (14), à savoir s'étendant dans des plans longitudinaux.

18. Ensemble propulsif selon l'une des revendications 14, 16 ou 17, **caractérisé en ce que** les tranchées (13') et les créneaux (14') de la peau résistive s'étendent dans des plans transversaux.

19. Ensemble propulsif selon l'une des revendications 14, 16, 17 ou 18, **caractérisé en ce que** la peau résistive (1) comprend un talon avant (16) et/ou un talon arrière (15), chaque talon prolongeant la face visible (11) de la peau résistive dans des plans transversaux vers l'extérieur de l'entrée d'air.

20. Aéronef **caractérisé en ce qu'**il comprend au moins un ensemble propulsif selon l'une des revendications 14 à 19.

## Patentansprüche

1. Akustisches Paneel für einen Lufteinlass in eine Luftfahrzeuggondel, beinhaltend eine widerstandsfähige Haut (1), die von Schallabsorptionslöchern (10) durchbohrt ist, und einen Kern (2), gegen den sich die widerstandsfähige Haut (1) erstreckt und an dem sie befestigt ist, wobei die Löcher den Wellen eine Ausbreitung in dem Kern ermöglichen, um dort gedämpft zu werden, wobei die widerstandsfähige Haut (1) eine glatte sichtbare Fläche (11) und eine geriefte hintere Fläche (12) besitzt, welche abwechselnd Gräben (13; 13'), die einer ersten akustischen Schicht der widerstandsfähigen Haut mit einer geringeren Dicke entsprechen, und Zinnen (14; 14'), die durch eine zweite strukturelle Schicht der widerstandsfähigen Haut mit einer größeren Dicke gebildet werden, aufweist, wobei das akustische Paneel **dadurch gekennzeichnet ist, dass** die Schallabsorptionslöcher (10) ausschließlich in den Gräben (13; 13') eingerichtet sind.

2. Akustisches Lufteinlasspaneel nach Anspruch 1, **dadurch gekennzeichnet, dass** die Dicke der widerstandsfähigen Haut im Bereich der Gräben (13; 13') mindestens 30 % dünner als die Dicke der widerstandsfähigen Haut (1) im Bereich der Zinnen (14; 14') ist.

3. Akustisches Lufteinlasspaneel nach einem der Ansprüche 1 oder 2, **dadurch gekennzeichnet, dass** die Dicke der widerstandsfähigen Haut (1) im Bereich der Gräben (13; 13') höchstens 150 % der kleinsten Abmessung der Schallabsorptionslöcher (10) in dem Fall kreisförmiger oder quadratischer Schallabsorptionslöcher beträgt oder höchstens 200 % der kleinsten Abmessung der Schallabsorptionslöcher in dem Fall länglicher Schallabsorptionslöcher beträgt.

4. Akustisches Lufteinlasspaneel nach einem der Ansprüche 1 bis 3, **dadurch gekennzeichnet, dass** die Schallabsorptionslöcher (10) kreisförmig sind und einen Durchmesser kleiner als 0,6 mm für einen TSO, Anteil der offenen Oberfläche, zwischen 0 und 2 % und kleiner als 0,3 mm für einen TSO größer als 2 % aufweisen.

5. Akustisches Lufteinlasspaneel nach einem der Ansprüche 1 bis 3, **dadurch gekennzeichnet, dass** die Schallabsorptionslöcher länglich sind und ein Verhältnis zwischen Länge und Breite zwischen 5 und 15 aufweisen.

6. Akustisches Lufteinlasspaneel nach einem der Ansprüche 1 bis 5, **dadurch gekennzeichnet, dass** die zweite strukturelle Schicht der widerstandsfähigen Haut die Form einer durchbrochenen durchgehenden Schicht aufweist, in der rechteckige oder längliche oder kreisförmige Öffnungen (28) eingerichtet sind, wobei die Öffnungen die Gräben begrenzen, in denen die Schallabsorptionslöcher eingerichtet sind.

7. Akustisches Lufteinlasspaneel nach einem der Ansprüche 1 bis 6, **dadurch gekennzeichnet, dass** die widerstandsfähige Haut (1) einstückig ist.

8. Akustisches Lufteinlasspaneel nach einem der Ansprüche 1 bis 7, **dadurch gekennzeichnet, dass** die widerstandsfähige Haut (1) aus thermoplastischem Kohlenstoff ist.

9. Akustisches Lufteinlasspaneel nach einem der Ansprüche 1 bis 8, **dadurch gekennzeichnet, dass** die widerstandsfähige Haut (1) zwei geradlinige Längsseiten aufweist, von denen mindestens eine über eine verdünnte Randleiste (17) zur Befestigung des akustischen Paneels an einem benachbarten akustischen Paneel verfügt, wobei die Längsränder diejenigen sind, die sich jeweils in einer Längsebene erstrecken, die die Mittelachse des Lufteinlasses enthält, wenn das Paneel in dem Lufteinlass installiert ist.

10. Akustisches Lufteinlasspaneel nach Anspruch 9, **dadurch gekennzeichnet, dass** die verdünnte Randleiste (17) der ersten Schicht der widerstandsfähigen Haut entspricht.

11. Akustisches Lufteinlasspaneel nach einem der Ansprüche 9 oder 10, **dadurch gekennzeichnet, dass** es eine gesickte verdünnte Randleiste auf einer Seite des Paneels und eine ungesickte verdünnte Randleiste auf der anderen Seite des Paneels beinhaltet.

12. Akustisches Lufteinlasspaneel nach einem der Ansprüche 9 oder 10, **dadurch gekennzeichnet, dass** es auf einer Seite eine erste verdünnte Randleiste, die durch die erste akustische Schicht der widerstandsfähigen Haut gebildet wird, und auf der anderen Seite eine zweite verdünnte Randleiste, die durch die zweite strukturelle Schicht der widerstandsfähigen Haut gebildet wird, aufweist.

13. Akustisches Lufteinlasspaneel nach einem der Ansprüche 9 oder 10, **dadurch gekennzeichnet, dass** es auf einer Seite eine erste Randleiste mit einer vorderen Abschrägung (31) und auf der anderen Seite eine zweite Randleiste mit einer hinteren Abschrägung (32) aufweist.

14. Antriebseinheit für ein Luftfahrzeug, **dadurch gekennzeichnet, dass** sie eine Gondel beinhaltet, die einen Lufteinlass aufweist, der mit akustischen Paneelen nach einem der Ansprüche 1 bis 13 ausgerüstet ist, wobei sich die Ausrücke "Querrichtung" und "quer" auf eine Richtung beziehen, die sich in einer Querebene des Lufteinlasses erstreckt, das heißt eine Richtung, die zu der Mittelachse X des Lufteinlasses orthogonal ist, wobei eine "Längsebene" eine Ebene ist, die die Mittelachse des Lufteinlasses enthält.

15. Antriebseinheit nach Anspruch 14, **dadurch gekennzeichnet, dass** jedes Lufteinlasspaneel auf jeder Seite eine verdünnte Randleiste (17) beinhaltet, die der ersten akustischen Schicht der widerstandsfähigen Haut entspricht und eine glatte hintere Fläche aufweist, und dass an dem Übergang zwischen aufeinanderfolgenden Paneelen Laschen (18, 19) auf der hinteren Fläche der benachbarten Randleisten der Paneele angebracht und befestigt sind.

16. Antriebseinheit nach Anspruch 14, **dadurch gekennzeichnet, dass** sich die Zinnen (14) der widerstandsfähigen Haut im Wesentlichen in Längsebenen erstrecken.

17. Antriebseinheit nach einem der Ansprüche 14 oder 16, **dadurch gekennzeichnet, dass** das Paneel Verstärkungsumwicklungen beinhaltet, die die Form eines spiralförmigen strukturellen Streifens oder einer Vielzahl von strukturellen Querstreifen (4) aufweisen, die sich zwischen der widerstandsfähigen Haut (1) und dem Kern (2) des akustischen Paneels erstrecken und dabei die Längszinnen (14) umgeben, nämlich sich in Längsebenen erstrecken.

18. Antriebseinheit nach einem der Ansprüche 14, 16 oder 17, **dadurch gekennzeichnet, dass** sich die Gräben (13') und die Zinnen (14') der widerstandsfähigen Haut in Querebenen erstrecken.

19. Antriebseinheit nach einem der Ansprüche 14, 16, 17 oder 18, **dadurch gekennzeichnet, dass** die widerstandsfähige Haut (1) einen vorderen Absatz (16) und/oder einen hinteren Absatz (15) beinhaltet, wobei jeder Absatz die sichtbare Fläche (11) der widerstandsfähigen Haut in Querebenen hin zur Außenseite des Lufteinlasses verlängert.

20. Luftfahrzeug, **dadurch gekennzeichnet, dass** es mindestens eine Antriebseinheit nach einem der Ansprüche 14 bis 19 beinhaltet.

## Claims

1. Aircraft nacelle air intake acoustic panel comprising a resistive skin (1) pierced with sound absorption holes (10) and a core (2) against which the resistive skin (1) extends and to which it is fastened, the holes allowing the waves to propagate into the core so as to be attenuated there, the resistive skin (1) having a smooth visible face (11) and a crenellated rear face (12) having an alternation of trenches (13; 13') corresponding to a first, acoustic layer of the resistive skin, of lesser thickness, and crenellations (14; 14') formed by a second, structural layer of the resistive skin, of greater thickness, the acoustic panel being **characterized in that** the sound absorption holes (10) are only provided in the trenches (13; 13').

2. Air intake acoustic panel according to Claim 1, **characterized in that** the thickness of the resistive skin at the trenches (13; 13') is at least 30% thinner than the thickness of the resistive skin (1) at the crenellations (14; 14').

3. Air intake acoustic panel according to either of Claims 1 and 2, **characterized in that** the thickness of the resistive skin (1) at the trenches (13; 13') is at most equal to 150% of the smallest dimension of the sound absorption holes (10) in the case of sound absorption holes of circular or square shape, or at most equal to 200% of the smallest dimension of the sound absorption holes in the case of oblong sound absorption holes.

4. Air intake acoustic panel according to one of Claims 1 to 3, **characterized in that** the sound absorption holes (10) are of circular shape and have a diameter of less than 0.6 mm for an OAR, open area ratio, of between 0% and 2% and less than 0.3 mm for an OAR greater than 2%.

5. Air intake acoustic panel according to one of Claims 1 to 3, **characterized in that** the sound absorption holes are of oblong shape with a length-to-width ratio of between 5 and 15.

6. Air intake acoustic panel according to one of Claims 1 to 5, **characterized in that** the second, structural layer of the resistive skin has the form of a continuous openwork layer, in which rectangular or oblong or circular openings (28) are provided, which openings delimit the trenches in which the sound absorption holes are provided.

7. Air intake acoustic panel according to one of Claims 1 to 6, **characterized in that** the resistive skin (1) is in one piece.

8. Air intake acoustic panel according to one of Claims 1 to 7, **characterized in that** the resistive skin (1) is made of thermoplastic carbon.

9. Air intake acoustic panel according to one of Claims 1 to 8, **characterized in that** the resistive skin (1) has two rectilinear longitudinal sides, at least one of which is provided with a thinned border tongue (17) for fastening the acoustic panel to an adjacent acoustic panel, the longitudinal edges being those that each extend in a longitudinal plane containing the central axis of the air intake when the panel is installed in the air intake.

10. Air intake acoustic panel according to Claim 9, **characterized in that** the thinned border tongue (17) corresponds to the first layer of the resistive skin.

11. Air intake acoustic panel according to either of Claims 9 and 10, **characterized in that** it comprises a swaged thinned border tongue on one side of the panel and an unswaged thinned border tongue on the other side of the panel.

12. Air intake acoustic panel according to either of Claims 9 and 10, **characterized in that** it has, on one side, a first thinned border tongue formed by the first, acoustic layer of the resistive skin and, on the other side, a second thinned border tongue formed by the second, structural layer of the resistive skin.

13. Air intake acoustic panel according to either of Claims 9 and 10, **characterized in that** it has, on one side, a first border tongue (31) with a front bevel and, on the other side, a second border tongue (32) with a rear bevel.

14. Propulsion assembly for an aircraft, **characterized in that** it comprises a nacelle having an air intake equipped with acoustic panels according to one of Claims 1 to 13, the expressions "transverse direction" and "transversely" referring to a direction that extends in a transverse plane of the air intake, i.e. a direction that is orthogonal to the central axis X of the air intake, a "longitudinal plane" being a plane containing the central axis of the air intake.

15. Propulsion assembly according to Claim 14, **characterized in that** each air intake panel comprises, on each side, a thinned border tongue (17) corresponding to the first, acoustic layer of the resistive skin and having a smooth rear face, and **in that**, at the join between successive panels, fishplates (18, 19) are added and fastened to the rear face of the adjacent border tongues of said panels.

16. Propulsion assembly according to Claim 14, **characterized in that** the crenellations (14) of the resistive skin extend essentially in longitudinal planes.

17. Propulsion assembly according to either of Claims 14 and 16, **characterized in that** the panel comprises reinforcing coils having the form of a helical structural strip or a plurality of transverse structural strips (4) extending between the resistive skin (1) and the core (2) of the acoustic panel, encircling the longitudinal crenellations (14), namely extending in longitudinal planes.

18. Propulsion assembly according to one of Claims 14, 16 or 17, **characterized in that** the trenches (13') and the crenellations (14') of the resistive skin extend in transverse planes.

19. Propulsion assembly according to one of Claims 14, 16, 17 or 18, **characterized in that** the resistive skin (1) comprises a front heel (16) and/or a rear heel (15), each heel extending the visible face (11) of the resistive skin in transverse planes towards the outside of the air intake.

20. Aircraft, **characterized in that** it comprises at least one propulsion assembly according to one of Claims 14 to 19.
